Europäisches Patentamt

European Patent Office

Office européen des brevets

(11) Publication number: **0 084 207**
**B1**

(12) **EUROPEAN PATENT SPECIFICATION**

(45) Date of publication of patent specification: **27.08.86**

(21) Application number: **82300284.5**

(22) Date of filing: **20.01.82**

(51) Int. Cl.⁴: **F 16 D 3/68**

(54) **Drive arrangement between non-aligned shafts.**

| | |
|---|---|
| (43) Date of publication of application:<br>**27.07.83 Bulletin 83/30** | (73) Proprietor: **DEERE & COMPANY**<br>**1 John Deere Road**<br>**Moline Illinois 61265 (US)** |
| (45) Publication of the grant of the patent:<br>**27.08.86 Bulletin 86/35** | (72) Inventor: **Kryscyk, Robert**<br>**Hockenheimer Strasse 153**<br>**D-6834 Ketsch (DE)** |
| (84) Designated Contracting States:<br>**AT BE CH DE FR GB IT LI NL SE** | (74) Representative: **Pears, David Ashley et al**<br>**REDDIE & GROSE 16 Theobalds Road**<br>**London WC1X 8PL (GB)** |
| (56) References cited:<br>**FR-A-2 095 646**<br>**GB-A- 566 083**<br>**GB-A- 731 081**<br>**GB-A- 832 092**<br>**GB-A- 858 768**<br>**GB-A-1 178 156**<br>**GB-A-1 286 476**<br>**US-A-1 561 476**<br>**US-A-3 485 062** | |

Courier Press, Leamington Spa, England.

## Description

The present invention relates to a drive arrangement between first and second non-aligned shafts, utilizing an intermediate shaft coupled at its two ends to the first and second shafts respectively, wherein the two ends of the intermediate shaft carry claws in positive driving engagement with corresponding claws on the first and second shafts respectively, by way of interposed bodies of resiliently compressible elastomeric materials. The lack of alignment may be pure eccentricity between the parallel axes of the first and second shafts or there may be lack of parallelism between these axes.

A need exists for a simple, cheap and compact arrangement which can be used at least when the degree of potential mis-alignment is slight. An example of the usefulness of such an improved arrangement arises in the following circumstances. When two units such an an engine and a pump driven thereby, e.g. a hydraulic pump in an agricultural or earth-working vehicle, are coupled together, it is a common practice to bolt one unit on to the other and provide machined mating parts which ensure precise positioning, such that the axes of the shafts of the unit are exactly aligned and can be directly coupled, e.g. by a tongue on one shaft received in a slot in the other. As against this, it would frequently be more convenient to mount the two units independently on the chassis or frame. It is then impossible to ensure alignment between the shafts, firstly because the chassis or frame is not an article of precision engineering and secondly because of the customary use of resilient mountings of engines and other units. This alternative approach will only therefore be feasible if a suitably cheap and simple drive arrangement of the aforementioned type is made available.

Another problem arises in driving units such as multiple-piston hydraulic pumps is that their reaction torque is not steady but pulsates. It is therefore desirable to provide a drive arrangement which not only caters for non-aligned shafts but also has shock-aborbing properties to absorb the torque peaks as well as the eccentric forces arising from the non-alignment of the shafts.

A drive arrangement according to the opening paragraph above meets these requirements and is known from GB—A—1 286 476. A problem with the known arrangement is that the elastomeric bodies generate internal frictional heat in operation and are therefore desirably cooled to avoid deterioration of their material. The object of the present invention is to provide a simple means of effecting the cooling. To this end the invention is characterised in that at each end of the intermediate shaft, one shaft has an axial pin projecting into an oversize hole in the adjacent shaft, in that both the axial pins and the intermediate shaft are hollow, so as to provide a passage for free flow of cooling air for cooling the elastomeric bodies, and by an impeller which draws cooling air through the passage.

The intermediate shaft is thus mounted floating between the first and second drive shafts but the axial pins projecting into the oversize holes provide a safety precaution against inadvertent disengagement, should excessive eccentric forces occur. Each axial pin is preferably a split spring sleeve. By making the pins as well as the intermediate shaft hollow it is possible to provide a large passage for free flow of cooling air. Under normal conditions the axial pins never touch the walls of the oversize holes but they will prevent the intermediate shaft moving too eccentrically.

It is known from GB—A—1 178 156 to provide intersities to allow a liquid being pumped to penetrate into a coupling and effect cooling. This construction is applicable to submerged pumps whereas the present invention requires the provision of a large through passageway enabling cooling air to be drawn right through the coupling.

In the preferred arrangement, each said elastomeric body comprises a ring and teeth projecting therefrom, each such tooth being trapped between two teeth pertaining to the two corresponding claw structures.

To assist such action, the elastomeric teeth preferably have a curved profile, preferably a part spherical profile on each flank, while the claw teeth have complementary profiles.

The invention will be described in more detail, by way of example, with reference to the accompanying drawings, in which:

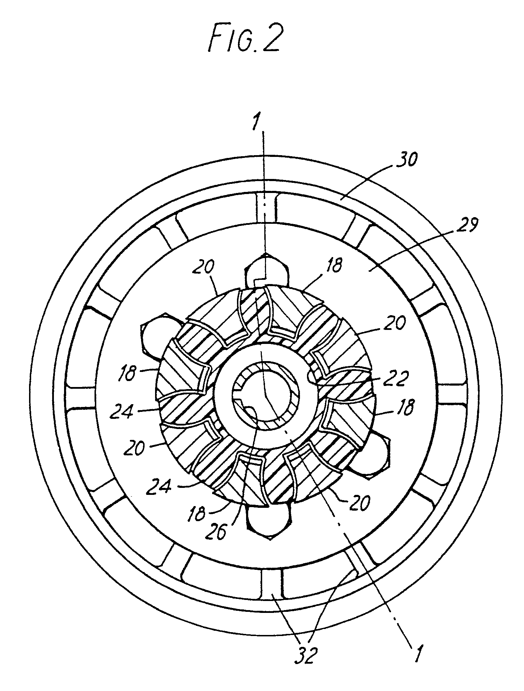

Fig. 1 is a section on line 1—1 of Fig. 2 showing the intermediate shaft coupled to the first and second non-aligned shafts, and

Fig. 2 is an axial section on line 2—2 of Fig. 1.

The drive arrangement enables a drive shaft 10 of a diesel engine for instance to drive a hydraulic pump, for instance, via a second shaft 12. The engine drive shaft is represented by a belt drive pulley in the illustrated embodiment. An intermediate shaft 14, which is hollow, is coupled at its two ends to the drive shaft 10 and the second shaft 12 respectively.

To each end of the intermediate shaft 14 is attached a claw ring 16 which is a ring having a first face welded to the intermediate shaft 14 so that the ring is coaxially with the intermediate shaft 14. Four teeth 18 spaced equally around the ring extend perpendicularly from the second face. Similar claw rings 17a and 17b are attached to the drive shaft 10 and to the second shaft 12, with their teeth 20 projecting towards the intermediate shaft 14. The claw rings form two pairs, one at each end of the intermediate shaft 14. In each pair the teeth of each claw ring lie in the spaces between the teeth of the other claw ring, but do not engage. A toothed ring 22 projects into the spaces between adjacent teeth of the claw rings. Each toothed ring 22 lies coaxial with and between the claw rings and between the teeth of the claw rings and the hub axis. The elastomeric teeth 24 provide a positive driving engagement between the teeth of the two claw rings of each pair.

The teeth 24 of each toothed ring 22 have a convex spherical profile on each flank and the teeth 18, 20 of the claw rings have complementary concave profiles. This enables the driving engagement to be maintained when the axes of the coupled shafts are slightly misaligned and tends to retain each toothed ring in position and to hold the intermediate shaft 14 in position between the two coupled shafts 10 and 12.

A pair of split spring sleeves 26 is provided as a safety precaution against inadvertent disengagement. One end of each sleeve is jammed into a hole in the claw ring 16 of the respective end of the intermediate shaft 14. The second end of each sleeve 26 projects into an oversize hole 28 in the corresponding claw ring 17a, 17b of the drive shaft 10 or second shaft 12. The sleeves 26 and holes 28 are coaxial with the intermediate shaft 14. The spring sleeves serve to limit the eccentricity of the shafts to each other. The sleeves 26 strike the walls of the holes 28 when the eccentricity of the shafts reaches the maximum allowed and prevent further deviation between the shafts.

The claw ring 17a mounted on the drive shaft 10 is welded to a flange 29 which is bolted to the drive shaft pulley 10, an impeller disk 30 being interposed between the flange 29 and the pulley. The face of the impeller disk facing the flange is recessed and provided with vanes 32 so that, when it rotates, it acts as a centrifugal impeller and draws air through the hollow shaft 14 and the sleeves 26, as indicated by arrows 34. The air cools the drive arrangement, in particular the toothed elastomeric rings 22 in which heat is generated by internal friction. The cooling prevents degradation of the elastomeric material.

The claw ring 17b mounted on the second shaft 12 is welded to a split sleeve 36 which is attached to the second shaft 12 by means of a binding screw 38. When the screw is tightened it draws the halves of the split sleeve together and clamps them on to the shaft 12.

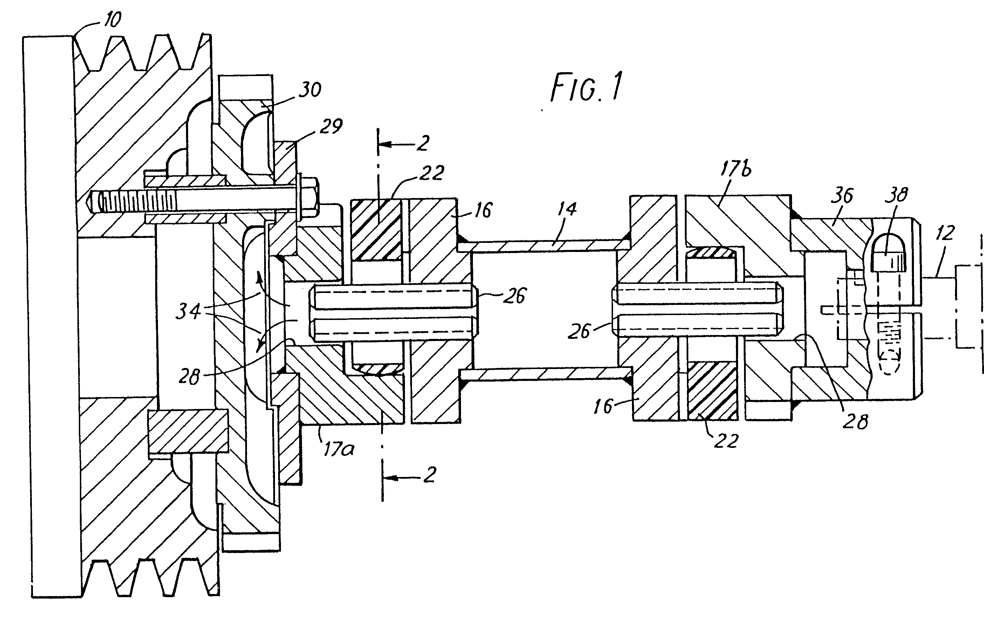

The intermediate shaft 14 can be easily disengaged by loosening the binding screw 38 and sliding the split sleeve 36 along the second shaft 12, away from the intermediate shaft 14. This enables the intermediate shaft 14 to be moved axially to disengage the claw rings at each end, whereupon the intermediate shaft 14 can be removed, e.g. for replacement of the rings 22. Assembly is equally straightforward. The various parts are merely offered up and held in place by sliding the sleeve 36 to the left in Fig. 1 and then tightening the screw 38. The intermediate shaft is mounted in floating manner between the shafts 10 and 12.

## Claims

1. A drive arrangement between first and second non-aligned shafts (10, 12), utilizing an intermediate shaft (14) coupled at its two ends to the first and second shafts respectively, wherein the two ends of the intermediate shaft carry claws (16) in positive driving engagement with corresponding claws (17a, 17b) on the first and second shafts respectively, by way of interposed bodies (22) of resiliently compressible elastomeric material, characterised in that, at each end of the intermediate shaft, one shaft has an axial pin (26) projecting into an oversize hole in the adjacent shaft, in that both the axial pins (26) and the intermediate shaft (14) are hollow, so as to provide a passage for free flow of cooling air for cooling the elastomeric bodies (22), and by an impeller (30, 32) which draws cooling air through the passage.

2. A drive arrangement according to claim 1, characterised in that each said body (22) comprises a ring and teeth (24) projecting therefrom, each such tooth being trapped between two teeth (18 and 20) pertaining to the two corresponding claws (16, 17a, 17b).

3. A drive arrangement according to claim 2, characterised in that the flanks of the elastomeric teeth (24) are rounded and the claw teeth (18, 20) are complementarily rounded.

4. A drive arrangement according to claim 1, 2 or 3, characterised in that the intermediate shaft (14) is mounted floating between the first and second shafts (10, 12).

5. A drive arrangement according to any of claims 1 to 4, characterised in that each axial pin (26) is split spring sleeve.

6. Use of an arrangement according to any of claims 1 to 5, to couple the motor of a vehicle to a hydraulic pump.

## Patentansprüche

1. Antriebsanordnung zwischen ersten und zweiten nicht ausgerichteten Wellen (10, 12) unter Verwendung einer Zwischenwelle (14), die an ihren beiden Enden jeweils mit der ersten bzw. der zweiten Welle gekuppelt ist, wobei die beiden Enden der Zwischenwelle Klauen (16) aufweisen, die über dazwischen angeordnete Körper (22) aus nachgiebig zussammendrückbarem elastomerem Material in positivem Antriebseingriff mit korrespondierenden Klauen (17a, 17b) auf der ersten bzw. der zweiten Welle stehen, dadurch gekennzeichnet, daß an jedem Ende der Zwischenwelle eine Welle einen axialen Stift (26) aufweist, der in ein übergroßes Loch in der benachbarten Welle eingreift, daß beide axialen Stifte (26) und die Zwischenwelle (14) hohl sind, derart, daß sie einen Durchgang für einen freien Strom von Kühlluft zum Kühlen der elastomeren Körper (22) darbieten, und gekennzeichnet durch ein Gebläse (30, 32), welches Kühlluft durch den Durchgang saugt.

2. Antriebsanordnung nach Anspruch 1, dadurch gekennzeichnet, daß jeder der genannten Körper (22) einen Ring und Zähne (24) aufweist, die davon vorspringen, wobei jeder dieser Zähne eingefangen ist zwischen zwei Zähnen (18 und 20), die zu den beiden korrespondierenden Klauen (16, 17a, 17b) gehören.

3. Antriebsanordnung nach Anspruch 2, dadurch gekennzeichnet, daß die Flanken der elastomeren Zähne (24) gerundet sind und daß die Klauenzähne (18, 20) komplimentär gerundet sind.

4. Antriebsanordnung nach Anspruch 1, 2 oder 3, dadurch gekennzeichnet, daß die Zwischenwelle (14) schwimmend zwischen der ersten und der zweiten Welle (10, 12) montiert ist.

5. Antriebsanordnung nach irgendeinem der Ansprüche 1 bis 4, dadurch gekennzeichnet, daß jeder axiale Stift (26) eine geschlitzte Federhülse ist.

6. Verwendung einer Anordnung nach irgendeinem der Ansprüche 1 bis 5 zum Kuppeln des Motors eines Fahrzeuges mit einer hydraulischen Pumpe.

**Revendications**

1. Système de transmission entre un premier et un second arbres non alignés (10, 12), utilisant un arbre intermédiaire (14) accouplé à ses deux extrémités au premier et au second arbres respectivement, dans lequel les deux extrémités de l'arbre intermédiaire portent des jeux de griffes (16) venant en prise pour assurer un entraînement positif avec des jeux de griffes correspondantes (17a, 17b) prévues sur le premier et le second arbres respectivement, par l'intermédiaire d'organes interposés (22) en un matériau élastomère élastiquement compressible, caractérisé en ce que, à chaque extrémité de l'arbre intermédiaire, un arbre comporte un téton axial (26) faisant saillie à l'intérieur d'un trou surdimensionné prévu dans l'arbre adjacent, en ce que les deux tétons axiaux (26) et l'arbre intermédiaire (14) sont creux de manière à ménager un passage permettant le libre écoulement d'air de refroidissement pour refroidir les organes en élastomère (22), et par une turbine (30, 32) qui aspire de l'air de refroidissement à travers ce passage.

2. Système de transmission suivant la revendication 1, caractérisé en ce chaque organe (22) comprend un anneau et des dents (24) faisant saillie à partir de celuici, chacune de ces dents étant retenue entre deux dents (18 et 20) faisant partie des deux jeux de griffes correspondantes (16, 17a, 17b).

3. Système de transmission suivant la revendication 2, caractérisé en ce que les flancs des dents en élastomère (24) sont arrondis et en ce que les dents des jeux de griffes (18, 20) sont arrondies selon un profil complémentaire.

4. Système de transmission suivant la revendication 1, 2 ou 3, caractérisé en ce l'arbre intermédiaire (14) est monté flottant entre le premier et le second arbres (10, 12).

5. Système de transmission suivant l'une quelconque des revendications 1 à 4, caractérisé en ce que chaque téton axial (26) est constitué par une douille élastique fendue.

6. Aplication d'un système suivant l'une quelconque des revendications 1 à 5 pour accoupler le moteur d'un véhicule à un pompe hydraulique.

*FIG.1*

0 084 207

0 084 207

FIG.2

2